# EUROPEAN PATENT APPLICATION

(11) **EP 4 585 511 A1**
(43) Date of publication of application: **16.07.2025**
(21) Application number: 24382035.4
(22) Date of filing: 15.01.2024
(51) Int. Cl.: B64C 37/02, B64D 27/34

(54) **ELECTRIC PROPULSION AIRCRAFT WITH EXTENDED RANGE**

(71) Applicant: Seaquenz SL, 01005 Vitoria-Gasteiz (ES)
(72) Inventor: OCHOA DE ERIBE MARTÍNEZ, Xabier, 01008 VITORIA-GASTEIZ (ES); PLAZA VILLAR, Angel Luis, 47011 Valladolid (ES); BITTEL, Nele Johanna, 81373 Munich (DE)
(74) Representative: Igartua, Ismael

(57) **Abstract**

Electric propulsion aircraft with extended range comprising a first airplane (1) connected to a second airplane (2) by the tips of their wings and an electrical connection (3) which transfers electricity between the airplanes (1, 2), the electrical connection (3) providing a movable joint allowing a first rotational movement (RX) about an X axis parallel to the direction of flight (F), a second rotational movement (RY) about a Y axis perpendicular to the X axis, a first translational movement (TY) in a Y axis, and a second translational movement (TZ) in a Z axis perpendicular to the Y axis, and restricts the translational movement in the X axis and the rotation about the Z axis.

## Description

### TECHNICAL FIELD

The present invention relates to electric propulsion aircraft using electricity, or electricity and fuel.

### PRIOR ART

Electric aircraft have significant advantages over conventional fossil-fuelled aircraft. For example, electric aircraft can achieve the same power output at any altitude, whereas fossil-fuelled aircraft lose a lot of power at higher altitudes due to low oxygen levels. In addition, electric aircraft produce no emissions, are low-noise and generate little heat.

However, the range of electric aircraft is limited, especially battery-powered aircraft, which requires the aircraft to land and spend a long period of time recharging the on-board batteries. To increase the range, larger batteries can be used, but this solution is not efficient as it increases the weight of the aircraft and therefore reduces the range. Another solution is to use batteries with better properties, but this significantly increases the cost of the aircraft. Alternatively, batteries can be recharged in flight, however, current recharging systems need to maintain the connection between the main aircraft and the recharging aircraft for a considerable time to recharge the batteries, which makes the recharging operation more difficult and increases the likelihood of problems. Currently, in civil aviation (commercial or passenger), there are no known solutions for safely recharging an aircraft electrically in flight.

US20140339371A1 shows an electric aircraft with extended range. In one solution, it uses disposable batteries that separate and detach from the aircraft when they are depleted, thereby reducing the weight of the aircraft and avoiding the need to carry the weight of empty batteries. In another solution uses unmanned aerial vehicles (UAVs) with batteries that dock in flight with the aircraft to recharge the aircraft and increase range, and when the UAV batteries run out, the UAVs detach to recharge their batteries again so that the aircraft does not have to carry the extra weight of the UAVs.

### DISCLOSURE OF THE INVENTION

The object of the invention is to provide an electric propulsion aircraft with extended range, as defined in the claims.

The invention relates to an electric propulsion aircraft with extended range comprising a first airplane connected to at least a second airplane and an electrical connection transferring electricity between the airplanes. The first airplane having a fuselage with wings attached to the fuselage, a first set of batteries and propellers, at least partially, powered by the first set of batteries. The second airplane having a fuselage with wings attached to the fuselage, a second set of batteries and propellers, at least partially, powered by the second set of batteries. The first airplane and the second airplane having a longitudinal axis that is parallel to a direction of flight of the aircraft.

The electrical connection comprises a first electrical connection part which engages a second electrical connection part, the first electrical connection part being arranged on the tip of one of the wings of the first airplane and the second electrical connection part being arranged on the tip of one of the wings of the second airplane. The first electrical connection part establishes a movable joint with the second electrical connection part allowing a first rotational movement about an X axis parallel to the direction of flight, a second rotational movement about a Y axis perpendicular to the X axis, a first translational movement in the Y axis, and a second translational movement in a Z axis perpendicular to the X and Y axes, and restricting the translational movement in the X axis and the rotation about the Z axis.

The electrical connection establishes an electrical connection between the airplanes, allowing the electricity from the batteries to be shared between the propellers of the two airplanes. At the same time, the electrical connection establishes a mechanical link between the airplanes at the tip of the wings, so that the wingspan of the aircraft is increased, thereby increasing the LID ratio (L=Lift, D=Drag), so that for the same flight speed, less power is required from the engines, increasing the range of the aircraft. The mechanical link established by the electrical connection is flexible, allowing relative movement between the airplanes, but ensuring that the airplanes fly together to increase the overall wingspan of the aircraft, and although the airplanes fly synchronised, it also prevents any small misalignment between the airplanes from being transmitted through the connection in the form of vibrations that could destabilise the aircraft or damage the connection. Additionally, the flexibility of the electrical connection avoids problems with flutter, which is a self-induced vibration due to aerodynamic, mechanical and inertial interactions.

These and other advantages and features of the invention will become apparent in view of the figures and the detailed description of the invention.

### DESCRIPTION OF THE DRAWINGS

Figure 1 shows an electric propulsion aircraft with extended range according to an example of the invention.
Figure 2 shows an example of an electrical scheme of the aircraft in Figure 1.
Figure 3 shows an example of the electrical connection of the aircraft of Figure 1 in an enlarged view of the joint of two wings of the aircraft.
Figure 4 shows a top view of Figure 3.
Figure 5 shows an exploded view of the elements of the first electrical connection part shown in the example of Figures 3 and 4.
Figures 6 and 8 show perspective views of the first electrical connection part.
Figures 7 and 9 show perspective views of the second electrical connection part.

### DETAILED DISCLOSURE OF THE INVENTION

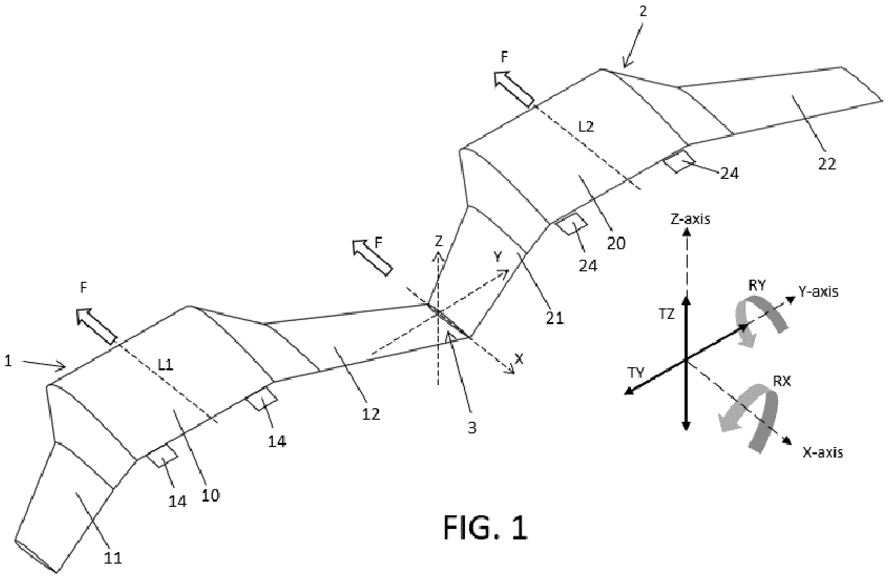

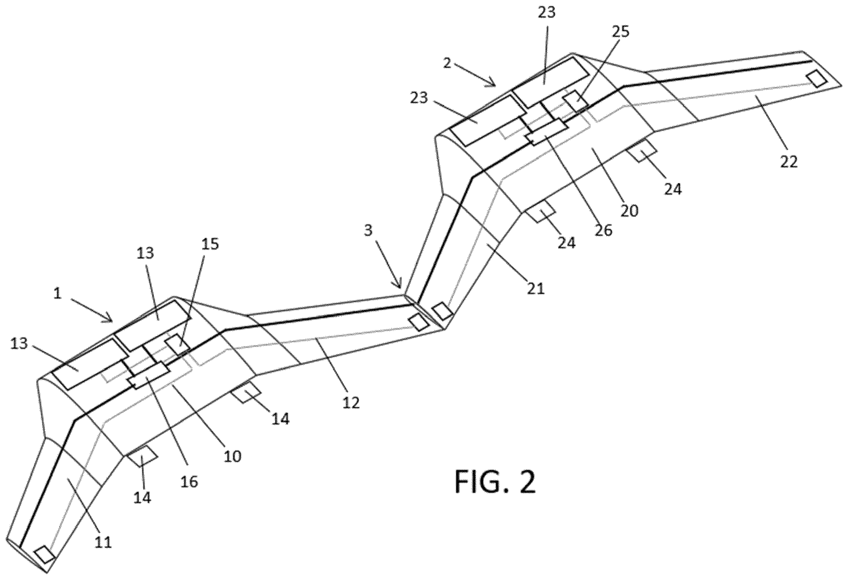

Figures 1 and 2 show an electric propulsion aircraft with extended range according to an example of the invention, wherein the aircraft comprises a first airplane 1 connected to at least a second airplane 2 and an electrical connection 3 transferring electricity between the airplanes 1 and 2.

The first airplane 1 has a fuselage 10 with wings 11 and 12 attached to the fuselage 10, a first set of batteries 13 and propellers 14, at least partially, powered by the first set of batteries 13. The second airplane 2 has a fuselage 20 with wings 21 and 22 attached to the fuselage 20, a second set of batteries 23 and propellers 24, at least partially, powered by the second set of batteries 23.

Preferably, propellers 14 and 24 are electric propellers powered by electricity, or hybrid propellers powered by electricity and fuel. Alternatively, one of the airplanes may have electric, or hybrid, propellers, and the other airplane may have solely fuel-powered propellers.

As shown in Figure 1, the first airplane 1 has a longitudinal axis L1 extending through the fuselage 10 and the second airplane 2 has another longitudinal axis L2 extending through the fuselage 20, such longitudinal axes L1 and L2 being parallel to the direction of flight F of the aircraft.

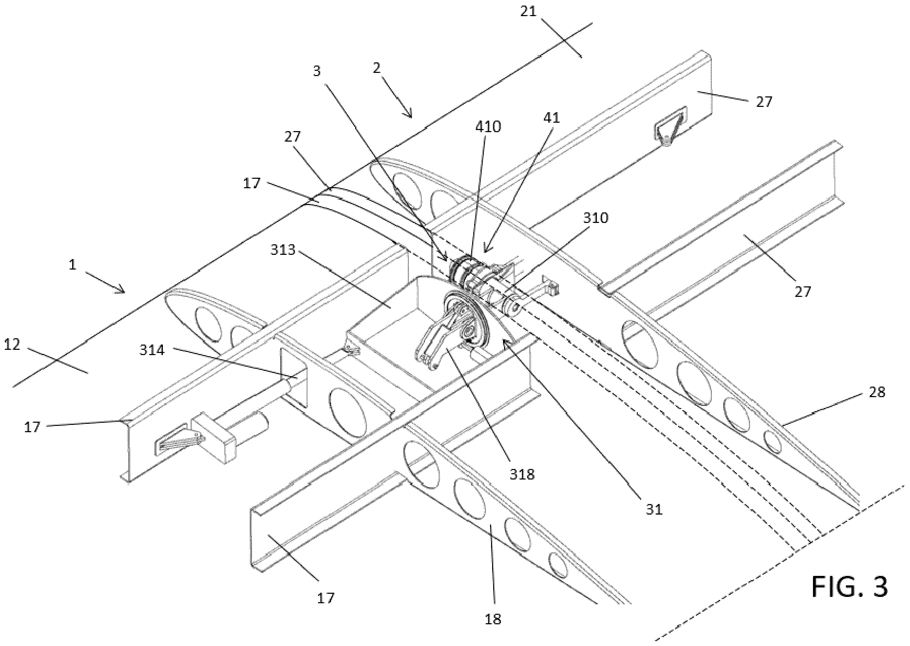

The wings of the aircraft have an airfoil composed by an upper surface, a lower surface, a leading edge and a trailing edge, and within the airfoil there is an internal structure composed by spars 17 and 27 and ribs 18 and 28 joining the spars 17 and 27 (see Figure 3).

As shown in Figure 2, the first set of batteries 13 is connected to a junction box 16 that is controlled by a battery management system 15 of the first airplane 1, and the second set of batteries 23 is connected to another junction box 26 that is controlled by a battery management system 25 of the second airplane 2, and the two junction boxes 16 and 26 are connected to the electrical connection 3 that transfers electricity between the airplanes 1 and 2. The battery management systems 15 and 25 are synchronized to share electricity from the first and second sets of batteries 13 and 23 between the airplanes 1 and 2, such that the electrical connection 3 transfers electricity from the batteries 13 and 23 between the two airplanes 1 and 2 to power the propellers 14 and 24 according to flight needs. Additionally, or alternatively, the electrical connection 3 transfers electricity between the batteries 13 and 23 to balance the electrical load therebetween.

Airplanes 1 and 2 are connected at the tips of their wings 12 and 21 via electrical connection 3, and airplanes 1 and 2 may be switched on and off during flight. In this way, when the two airplanes are connected in flight, the aspect ratio of the aircraft is increased by increasing the wingspan of the aircraft (distance between the tips of the wings), which allows for a reduction in fuel consumption and an increase in flight range.

The electrical connection 3 linking airplanes 1 and 2 is flexible allowing relative movement between the wings 12 and 21 of airplanes 1 and 2, so that there is no rigid connection between the airplanes which could lead to fluttering problems.

The first airplane 1 and the second airplane 2 are substantially identical, i.e. the airfoil of the wings of the two airplanes is the same, so that in flight the lift that can be generated by each airplane independently is the same.

The electrical connection 3 comprises a first electrical connection part 31 which engages a second electrical connection part 41. The first electrical connection part 31 is arranged at the tip of one of the wings 12 of the first airplane 1 and the second electrical connection part 41 is arranged at the tip of one of the wings 21 of the second airplane 2.

The first electrical connection part 31 establishes a movable joint with the second electrical connection part 41 allowing a first rotational movement RX about an X axis parallel to the direction of flight F, a second rotational movement RY about a Y axis perpendicular to the X axis (corresponding to the wingspan direction of the aircraft), a first translational movement TY in the Y axis, and a second translational movement TZ in a Z axis perpendicular to the X and Y axes, and restricts the translational movement on the X axis and the rotation about the Z axis (see Figure 1). In this way, a flexible mechanical connection is established between airplanes 1 and 2, so that each airplane may fly practically independently but both are aligned in the direction of flight F. If the connection were rigid, even if both airplanes fly synchronously, any slight desynchronisation between them would be transmitted through the electrical connection 3 and could cause vibrations that would destabilise the aircraft or cause connection 3 to break.

Preferably, as shown in the example of Figure 3, the first electrical connection part 31 is arranged within the wing 12 of the first airplane 1 and the second electrical connection part 41 is arranged within the wing 21 of the second airplane 2. In this way, the electrical connection parts 31 and 41 of the electrical connection 3 are housed within the airfoil of the wings 11 and 21 minimising the flight resistance.

In order to establish the coupling in flight, at least, the first electrical connection part 31 is displaceable in the Y axis to protrude from the wing 12 of the first airplane 1 in order to connect with the second electrical connection part 41 of the second airplane 2. Preferably, the tips of the wings 12 and 21 have a respective end piece 17 and 27 which opens during flight allowing the coupling between the electrical connection parts 31 and 41 of the electrical connection 3. Said end pieces 17 and 27 are closed when airplanes 1 and 2 are flying independently to avoid the appearance of air vortices at the tips of the wings, and when airplanes 1 and 2 are coupled, said pieces 17 and 27 connect wings 12 and 21 guaranteeing the continuity of the airfoil of both wings. Said parts 17 and 27 are elastic to allow the translational movements TY and TZ and rotational movements RX and RY between the first and second parts 31 and 41 of the electrical connection 3. In this way, parts 31 and 41 of the electrical connection 3 are housed within the airfoil when airplanes 1 and 2 fly independently and when they fly independently of each other.

To electrically couple airplanes 1 and 2, the airplanes are approached in flight to lie side by side at the level of the tips of the wings 12 and 21, the first airplane 1 being slightly behind the second airplane 2 in the direction of flight F (X axis), at that moment, the end pieces 17 and 27 are opened to expose the first and second electrical connection parts 31 and 41, then, the first electrical connection part 31 is moved in the Y direction to align with the second electrical connection part 41, and then the first airplane 1 moves faster than the second airplane 2 in the flight direction F (X axis) to couple the first electrical connection part 31 with the second electrical connection part 4, and finally the end pieces 17 and 27 are closed to maintain the airfoil of the wings 12 and 21.

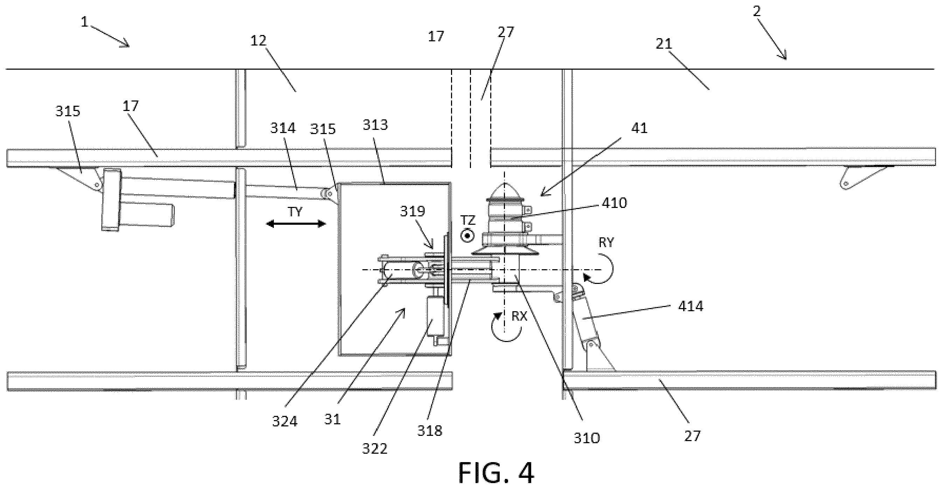

Figures 3 to 9 show an example of the first electrical connection part 31 and the second electrical connection part 41 of the electrical connection 3.

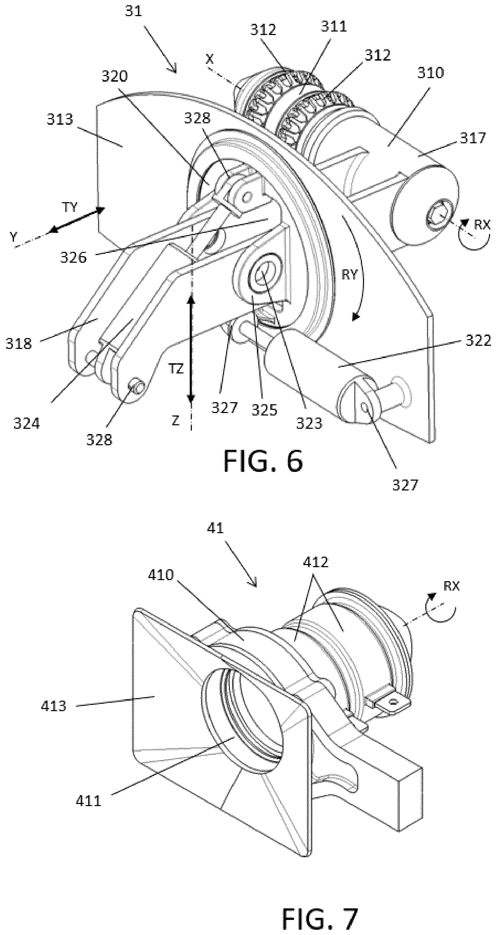

The first electrical connection portion 31 has a male connector 310 and the second electrical connection portion 41 has a female connector 410, the male connector 310 having a front part 311 that fits into a housing 411 of the female connector 410, the male connector 310 being able to rotate relative to the female connector 410 according to the first rotational movement RX. As shown in the example of Figures 6 to 9, the male connector 310 has a cylindrical shape and the housing 411 of the female connector 410 has a reciprocating shape to allow rotation between the two and thus the first airplane 1 may move with respect to the second airplane 2 according to the rotational movement RX about the X axis. The coupling between the male connector 310 and the female connector 410 allows the rotational movement RX about the X axis but also restricts translational movement in the X axis and rotation about the Z axis between both connectors.

The front part 311 of the male connector 310 has annular electrical contacts 312 which establish an electrical connection with other annular electrical contacts 412 which are arranged in the housing 411 of the female connector 410, such that the annular electrical contacts 312 and 412 maintain the electrical connection during rotation of the male connector 310 with respect to the female connector 410. In other words, the annular shape ensures the electrical connection during rotation between both connectors 310 and 410.

Preferably, as shown in Figure 7, the housing 411 of the female connector 410 has an inlet port 413 for directing the front part 311 of the male connector 310 towards the housing 411. The inlet port 413 is funnel-shaped to direct the front part 311 of the male connector 310 towards the female connector 410 during the mating manoeuvre between the parts 31 and 41 of the electrical connection 3.

The first electrical connection part 31 has a translation carriage 313 which is connected to the wing 12 of the first airplane 1 by an extendable cylinder 314, the first electrical connection part 31 being able to move relative to the wing 12 according to the first translational movement TY in the Y axis. Preferably, the extendable cylinder 314 has one end attached to a spar 17 of the wing 12 by a hinged joint 315 and another end attached to the translation carriage 313 by another hinged joint 315.

Preferably, the extendable cylinder 314 is a hydraulic cylinder that dampens the displacement of the translation carriage 313.

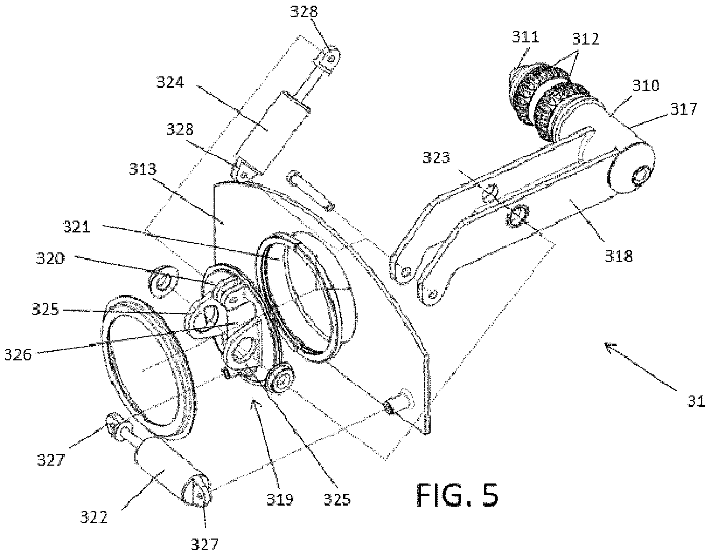

The male connector 310 of the first electrical connection part 31 has an rear part 317 with an arm 318 which is connected to the translation carriage 313 by a rotary coupling 319 allowing movement of the arm 318 of the male connector 310 with respect to the translation carriage 313 according to the second rotational movement RY about the Y axis, and the second translation movement TZ in the Z axis, see Figures 5 to 9.

Preferably, the rotary coupling 319 has an annular plate 320 which is inserted in an annular housing 321 of the translation carriage 313, and the arm 318 of the male connector 310 is attached to the annular plate 320, the annular plate 320 with the male connector 310 being able to rotate with respect to the annular housing 321 of the translation carriage 313 according to the second rotational movement RY about the Y axis.

Preferably, the annular plate 320 is connected to the translation carriage 313 by a first damper 322 which dampens the rotation of the annular plate 320. Even more preferably, the first damper 322 has one end connected to the annular plate 320 by a hinged joint 327 and another end connected to the translation carriage 313 by another hinged joint 327, see Figures 5 and 6.

The arm 318 of the male connector 310 is connected to the annular plate 320 by a pivot axis 323 which pivots the arm 318 of the male connector 310 about the pivot axis 323 causing the male connector 310 to move, the male connector 310 being able to move according to the second translational movement TZ in the Z axis.

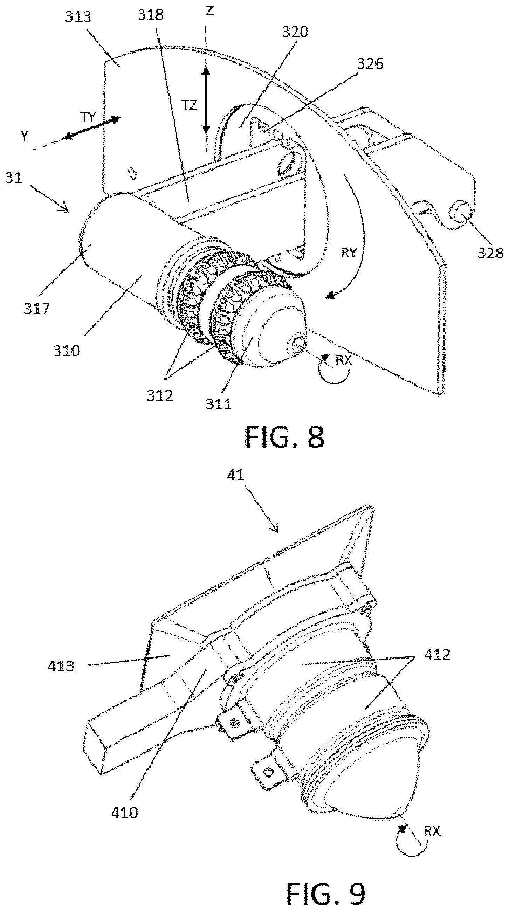

Preferably, the annular plate 320 has lugs 325 that are attached to the pivot axis 323 of the arm 318 to allow tilting of the arm 318, and the annular plate 320 has a central hole 326 that is traversed by the arm 318 and that has a vertical dimension greater than the vertical section of the arm 318 to allow the arm 318 to tilt and thus move vertically, allowing displacement of the male connector 310 according to the second translational movement TZ in the Z axis. See Figures 5 and 8. The vertical dimension of the central hole 326 of the annular plate 320 and the vertical section of the arm 318 can be selected to limit the vertical displacement of the male connector 310 in the Z axis.

Preferably, the arm 318 of the male connector 310 is attached to the annular plate 320 by a second damper 324 which dampens the tilting of the arm 318. Even more preferably, the second damper 324 has one end attached to the annular plate 320 by a hinged joint 328 and another end attached to the arm 318 by another hinged joint 328, see Figures 5 and 6.

Preferably, the second electrical connection portion 41 has a locking mechanism 414 that axially retains the male connector 310 when mated to the female connector 410, restricting the axial displacement of the male connector 310 in the X axis. The locking mechanism 414 has one end that is attached to a spar 27 of the wing 21 and another end that is attachable to the rear part 317 of the male connector 310. The male connector 310 establishes a tight engagement with the female connector 410 and is retained within the female connector during electrical coupling, but the locking mechanism 414 prevents accidental egress of the male connector 310. The locking mechanism 414 comprises an actuator which is attached to the spar 27 of the wing 21 and a lever which is moved by the actuator of the locking mechanism 414 to contact the rear part 317 of the male connector 310 and lock it relative to the female connector 410.

In the example shown in the Figures, two airplanes 1 and 2 are shown, however, the aircraft may comprise more than two airplanes connected together with respective electrical connections. Likewise, wing 12 of the first airplane 1 is shown with the first electrical connection part 31 and wing 21 of the second airplane 2 with the second electrical connection part 41, the other wings not necessarily having an electrical connection 3 if there are no other airplane, however, if more than two airplanes are to be connected to each other, the other wings 11 and 22 would also have a corresponding electrical connection 3.

## Claims

1. Electric propulsion aircraft with extended range comprising a first airplane (1) connected to at least a second airplane (2) and an electrical connection (3) transferring electricity between the airplanes (1, 2), the first airplane (1) having a fuselage (10) with wings (11, 12) attached to the fuselage (10), a first set of batteries (13) and propellers (14), at least partially, powered by the first set of batteries (13), the second airplane (2) having a fuselage (20) with wings (21, 22) attached to the fuselage (20), a second set of batteries (23) and propellers (24), at least partially, powered by the second set of batteries (23), the first airplane (1) and the second airplane (2) having a longitudinal axis (L1, L2) that is parallel to a direction of flight (F) of the aircraft, **characterised in that** the electrical connection (3) comprises a first electrical connection part (31) which engages a second electrical connection part (41), the first electrical connection part (31) being arranged on the tip of one of the wings (12) of the first airplane (1) and the second electrical connection part (41) being arranged on the tip of one of the wings (21) of the second airplane (2), the first electrical connection part (31) establishes a movable joint with the second electrical connection part (41) allowing a first rotational movement (RX) about an X axis parallel to the direction of flight (F), a second rotational movement (RY) about a Y axis perpendicular to the X axis, a first translational movement (TY) in the Y axis, and a second translational movement (TZ) in a Z axis perpendicular to the X and Y axes, and restricting the translational movement in the X axis and the rotation about the Z axis.

2. Aircraft according to claim 1, wherein the first electrical connection part (31) has a male connector (310) and the second electrical connection part (41) has a female connector (410), the male connector (310) having a front part (311) that fits into a housing (411) of the female connector (410), the male connector (310) being able to rotate relative to the female connector (410) according to the first rotational movement (RX) about the X axis.

3. Aircraft according to the preceding claim, wherein the front part (311) of the male connector (310) has annular electrical contacts (312) which establish an electrical connection with other annular electrical contacts (412) which are arranged in the housing (411) of the female connector (410), such that the annular electrical contacts (312,412) maintain the electrical connection during rotation of the male connector (310) with respect to the female connector (410).

4. Aircraft according to claim 2 or 3, wherein the housing (411) of the female connector (410) has an inlet port (413) for directing the front part (311) of the male connector (310) towards the housing (411).

5. Aircraft according to any of the preceding claims, wherein the first electrical connection part (31) has a translation carriage (313) which is connected to the wing (12) of the first airplane (1) by an extendable cylinder (314), the first electrical connection part (31) being able to move relative to the wing (12) according to the first translational movement (TY) in the Y axis.

6. Aircraft according to claim 5, wherein the extendable cylinder (314) is a hydraulic cylinder that dampens the displacement of the translation carriage (313).

7. Aircraft according to claim 5 or 6, wherein the male connector (310) of the first electrical connection part (31) has a rear part (317) with an arm (318) which is connected to the translation carriage (313) by a rotary coupling (319) allowing the movement of the arm (318) of the male connector (310) with respect to the translation carriage (313) according to the second rotational movement (RY) about the Y axis and the second translation movement (TZ) in the Z axis.

8. Aircraft according to the preceding claim, wherein the rotary coupling (319) has an annular plate (320) which is inserted into an annular housing (321) of the translation carriage (313), and the arm (318) of the male connector (310) is attached to the annular plate (320), the annular plate (320) with the male connector (310) being able to rotate with respect to the annular housing (321) of the translation carriage (313) according to the second rotational movement (RY) about the Y axis.

9. Aircraft according to the preceding claim, wherein the annular plate (320) is connected to the translation carriage (313) by a first damper (322) which dampens the rotation of the annular plate (320).

10. Aircraft according to claim 8 or 9, wherein the arm (318) of the male connector (310) is connected to the annular plate (320) by a pivot axis (323) which pivots the arm (318) of the male connector (310) about said pivot axis (323) causing the male connector (310) to move, the male connector (310) being able to move according to the second translational movement (TZ) in the Z axis.

11. Aircraft according to the preceding claim, wherein the arm (318) of the male connector (310) is connected to the annular plate (320) by a second damper (324) which dampens the tilting of the arm (318).

12. Aircraft according to any of the preceding claims, wherein the second electrical connection part (41) has a locking mechanism (414) that axially retains the male connector (310) when mated to the female connector (410), restricting the axial displacement of the male connector (310) in the X axis.

13. Aircraft according to any of the preceding claims, wherein the first electrical connection part (31) is arranged inside the wing (12) of the first airplane (1) and the second electrical connection part (41) is arranged inside the wing (21) of the second airplane (2).

14. Aircraft according to any of the preceding claims, wherein the first set of batteries (13) is connected to a junction box (16) which is controlled by a battery management system (15) of the first airplane (1), and the second set of batteries (23) is connected to another junction box (26) which is controlled by a battery management system (25) of the second airplane (2), and the two junction boxes (16, 26) are connected to the electrical connection (3) which transfers electricity between the first airplane (1) and the second airplane (2).

15. Aircraft according to the preceding claim, wherein the battery management systems (15, 25) are synchronised to share the electricity of the first set of batteries (13) and the second set of batteries (23) between the airplanes (1, 2).
